# EUROPÄISCHE PATENTSCHRIFT

(11) **EP 2 431 702 B1**
(45) Veröffentlichungstag und Bekanntmachung des Hinweises auf die Patenterteilung: **28.10.2020**
(21) Anmeldenummer: 11180190.8
(22) Anmeldetag: 06.09.2011
(51) Int. Cl.: H02K 9/18, H02K 9/12, H02K 1/20, H02K 1/32, F28F 27/02, F28D 21/00

(54) **Luftgekühlter Motorgenerator sowie Verfahren zum Betrieb eines solchen Motorgenerators**
Air-cooled motor-generator and method for operating such a motor-generator
Machine électrique refroidi par air et procéde pour actionner une telle machine

(30) Priorität: 21.09.2010 CH 15252010; 23.10.2010 DE 102010049417
(43) Veröffentlichungstag der Anmeldung: 21.03.2012
(73) Patentinhaber: GE Renewable Technologies, 38100 Grenoble (FR)
(72) Erfinder: Schwery, Alexander, 5024 Küttigen (CH); Baumeister, Stefan, 79790 Rheinheim (DE); Jordan, Benjamin, 5034 Suhr (CH); Frutiger, Simon Andreas, 5600 Lenzburg (CH)
(74) Vertreter: COPA Copenhagen Patents

(56) Entgegenhaltungen:
- EP-A1- 0 299 908
- WO-A1-03/040641
- JP-A- 59 157 491
- JP-A- 2008 067 471
- US-A1- 2009 146 512

## Beschreibung

Die vorliegende Erfindung bezieht sich auf das Gebiet der rotierenden elektrischen Maschinen. Sie betrifft einen luftgekühlten Motorgenerator gemäss dem Oberbegriff des Anspruchs 1.

Luftgekühlte Motorgeneratoren werden häufig über einen geschlossenen Luftkreislauf gekühlt. Die erforderliche Luftmenge wird durch die abzuführenden Verluste bestimmt. Da sowohl die anfallenden Verluste wie auch der generierte Kühlluftvolumenstrom im Vorfeld nicht exakt bestimmt werden können, müssen Reserven bezüglich des Volumenstromes eingeplant werden. Eine zu niedrige Luftmenge führt zur Überhitzung des Generators. Ein zu hoher Volumenstrom führt zu unnötigen Verlusten seitens der Ventilation. Ziel ist es also, den Kühlluftvolumenstrom so hoch wie nötig aber so niedrig wie möglich zu wählen. In der Regel wird der Volumenstrom durch künstlich erzeugte Druckabfälle innerhalb des Luftkreislaufes begrenzt (Drosselprinzip).

EP 0 299 908 A1 beschreibt eine elektrische Maschine mit einem geschlossenen Kühlkreislauf für ein gasförmiges Kühlmedium, welcher aufgeteilt ist in wenigstens zwei Wärmetauscher, die durch Trennwände und Flächen getrennt sind.

JP 2008 067471 A beschreibt eine Kühlgaseinrichtung zum Zirkulieren von Kühlgas in einer elektrischen Maschine mittels eines Statorventilators.

WO 03 040 641 A1 beschreibt einen Wärmetauscher zum Wärmetausch zwischen Flüssigkeiten mit einstellbaren Drosseln zum Drosseln des Flüssigkeitsstroms.

JP 59 157491 A beschreibt eine Vielzahl von Wärmetauscherrohren in einem Gas/Flüssigkeit Wärmetauscher. Der Gasfluss zu den Rohren wird durch Klappen am Eingang des Wärmetauschers geregelt.

Die vorliegende Erfindung vereinfacht und optimiert diese Vorgehensweise. Ziel ist es, den Kühlluftvolumenstrom den Anforderungen an die Kühlung möglichst genau anzupassen; sei dies einmalig, bei der Inbetriebnahme von Generatoren, oder häufiger, bei unterschiedlichen Lastfällen des Generators, wie sie bei Asynchronmaschinen vorkommen. Konventionell wird dies bei Wasserkraftmaschinen, wie sie z.B. in der Fig. 1 der Druckschrift EP 740 402 A1 dargestellt sind, beispielsweise durch Verengung bestimmter Querschnitte innerhalb des Luftpfades umgesetzt. Bei grossen Wasserkraftmaschinen geschieht dies häufig am Eintritt in den Rotorstern. Durch zusätzliche Bleche wird der Eintrittsquerschnitt verengt und somit die Kühlluftmenge begrenzt.

Dieses Vorgehen hat jedoch einige Nachteile:
- Das Montieren der Abdeckbleche auf dem Rotorstern ist je nach Konstruktion der Maschine bei eingebautem Rotor nicht mehr möglich. Die Öffnungsfläche beim Rotorsterneintritt muss also schon vor dem Rotoreinbau fix definiert werden.
- Falls das Einbringen der zusätzlichen Bleche bei eingebautem Rotor möglich ist, kann dies auch nur bei stehender Maschine erfolgen. Dies ist zeitaufwändig und der Volumenstrom kann trotzdem nicht exakt beeinflusst werden.
- Die Abdeckbleche bringen zusätzliches Gewicht mit sich, das die Lager belastet. Darüber hinaus müssen die Bleche entsprechend sorgfältig fixiert werden, da sie sich auf dem rotierenden Teil des Generators befinden.
- Die Volumenstromverteilung, die entscheidend für die Gleichmässigkeit der Kühlung und somit der Temperaturen in der Maschine ist, kann negativ beeinflusst werden.
- Auf unterschiedliche Lastfälle des Generators kann nicht reagiert werden.

### DARSTELLUNG DER ERFINDUNG

Es ist daher eine Aufgabe der Erfindung, einen Motorgenerator zu schaffen, welcher bezüglich der Kühlung die Nachteile der herkömmlichen Lösungen vermeidet und es ermöglicht, eine Drosselung im laufenden Betrieb vorzunehmen beziehungsweise den Volumenstrom der Kühlluft exakt den jeweiligen Anforderungen anzupassen, und dies insbesondere auch dynamisch bei unterschiedlicher Last. Dabei sollen die Lager der Maschine nicht zusätzlich belastet werden.

Die Aufgabe wird durch die Gesamtheit der Merkmale des Anspruchs 1 gelöst. Gemäss der Erfindung umfasst der luftgekühlte Motorgenerator einen Rotor mit einer um eine Maschinenachse drehbar angeordneten Rotorwelle, auf welcher eine Rotorwicklung angeordnet ist, sowie einen Stator mit einem Statorblechpaket und einer darin angeordneten Statorwicklung, welche die Rotorwicklung konzentrisch umgeben, wobei ein mit Kühlluft arbeitender, geschlossener Kühlkreislauf vorgesehen ist, in welchem die Kühlluft die Rotorwicklung und die Statorwicklung radial von innen nach aussen durchströmt, in ausserhalb des Stators angeordneten Kühlern abgekühlt und wieder in den Rotor zurückgeführt wird. Der erfindungsgemässe Motorgenerator ist dadurch gekennzeichnet, dass zur Einstellung des Volumenstroms der Kühlluft im Kühlkreislauf an den Kühlern einstellbare Drosselvorrichtungen vorgesehen sind.

Die vorliegende Erfindung ermöglicht eine Drosselung im laufenden Betrieb. Somit kann der Volumenstrom exakt den jeweiligen Anforderungen angepasst werden. Bei Bedarf ist dies auch dynamisch bei unterschiedlicher Last möglich. Die zusätzlich erforderlichen Bauteile befinden sich nicht im rotierenden Teil des Generators und belasten daher die Lager nicht unnötig. Bei der vorliegenden Erfindung wird praktisch am "Ende" des Kühlkreislaufes, das heisst vor oder nach den Kühlern, gedrosselt.

Gemäss einer Ausgestaltung der Erfindung sind die Drosselvorrichtungen auf der Eintrittsseite der Kühler angeordnet.

Gemäss einer anderen Ausgestaltung der Erfindung sind die Drosselvorrichtungen auf der Austrittsseite der Kühler angeordnet.

Die Erfindung ist dadurch gekennzeichnet, dass die Drosselvorrichtungen eine Vielzahl von in einer Ebene senkrecht zur Strömungsrichtung verteilt angeordneten Drosselelementen aufweisen, wobei jedes der Drosselelemente eine Durchtrittsöffnung umfasst.

In den Durchtrittsöffnungen ist erfindungsgemäss nach Art eines Klappenventils eine um eine Drehachse verschwenkbare Drosselklappe angeordnet.

Auch hier können die Drosselelemente einzeln betätigbar sein.

Ein Verfahren zum Betrieb eines Motorgenerators, welches nicht zur Erfindung gehört, ist dadurch gekennzeichnet, dass die Einstellung des Volumenstroms der Kühlluft bei laufendem Betrieb des Motorgenerators durch stufenlose Verstellung der Drosselvorrichtungen erfolgt.

Gemäss einer Ausgestaltung des Verfahrens erfolgt die Einstellung des Volumenstroms mittels der Drosselvorrichtungen nach Massgabe einer am Motorgenerator gemessenen Temperatur.

Eine andere Ausgestaltung des Verfahrens ist dadurch gekennzeichnet, dass die Einstellung des Volumenstroms einmalig bei der Inbetriebnahme des Motorgenerators erfolgt.

Eine noch andere Ausgestaltung des Verfahrens zeichnet sich dadurch aus, dass der Volumenstrom während des Betriebs des Motorgenerators je nach Lastfall dynamisch geregelt wird.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: den schematischen Aufbau eines vertikalachsigen Motorgenerators mit Luftkühlung, wie er zur Ausführung der Erfindung geeignet ist;
- Fig. 2: die Draufsicht in Strömungsrichtung auf eine Drosselvorrichtung; und
- Fig. 3: den Aufbau eines einzelnen Drosselelements der Drosselvorrichtung nach Fig. 2.

### WEGE ZUR AUSFÜHRUNG DER ERFINDUNG

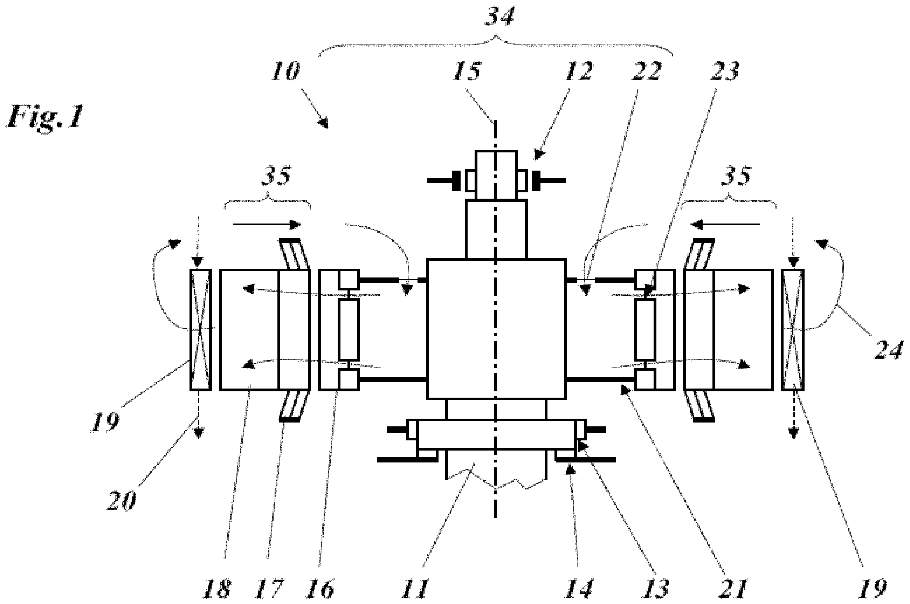

In Fig. 1 ist der schematische Aufbau eines vertikalachsigen Motorgenerators mit Luftkühlung wiedergegeben, wie er zur Ausführung der Erfindung geeignet ist. Der Motorgenerator 10 umfasst einen um eine Maschinenachse 15 drehbar angeordneten Rotor 34, der eine Rotorwelle oder -nabe 11 aufweist, auf der eine Rotorwicklung 16 in Form verteilt angeordneter Polwicklungen vorgesehen ist. Die Rotorwicklung 16 ist mit der Rotorwelle 11 über einen Rotorstern 21 verbunden.

Die Rotorwelle 11 ist mit Hilfe von Radiallagern 12, 13 und Axiallagern 14 drehbar gelagert. Der Rotorstern 21 ist zur Führung von Kühlluft 24 ausgebildet, die durch Eintrittsöffnungen 22 eintritt und mittels entsprechender Durchtrittskanäle 23 in der Rotorwicklung 16 in radialer Richtung durch die Rotorwicklung 16 nach aussen tritt. Die Rotorwicklung 16 ist konzentrisch von einem Stator 35 umgeben, der eine in einem Statorblechpaket 18 gelagerte Statorwicklung 17 aufweist. Die aus der Rotorwicklung 16 austretende Kühlluft durchströmt in radialer Richtung den Stator 35 und wird nach Austritt aus dem Stator 35 durch extern angeordnete Kühler 19, die von Wasser 20 durchflossen werden gekühlt. Die in den Kühlern 19 heruntergekühlte Kühlluft 24 wird zum Rotor 34 zurückgeleitet und tritt unter Schliessung des Kühlkreislaufes wieder in den Rotorstern 21 ein.

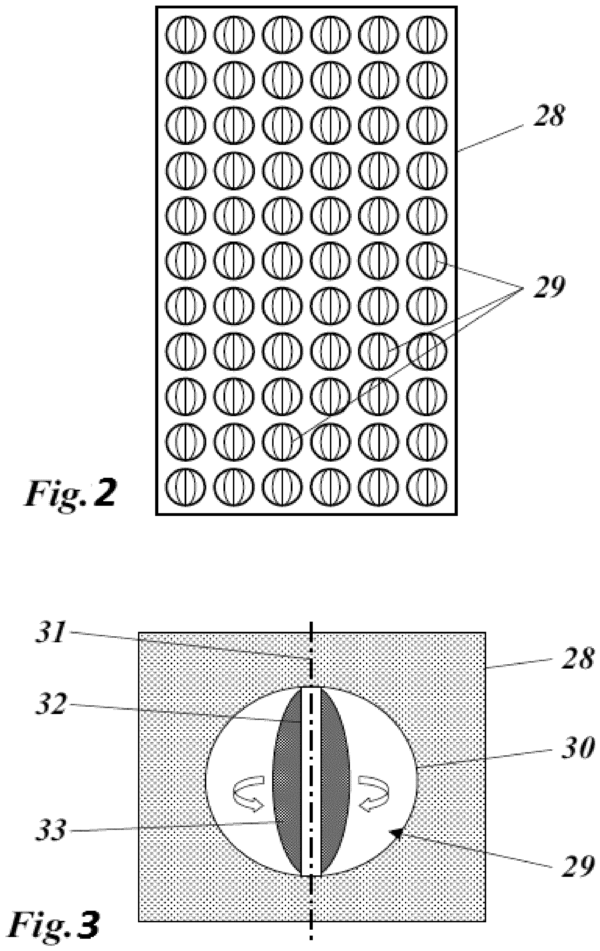

Ausführung und Funktionsweise der Drosselvorrichtungen können je nach Anforderung variieren: Eine Drosselvorrichtung ist in Fig. 2 und 3 wiedergegeben. Die Drosselvorrichtung 28 der Fig. 2 umfasst erfindungsgemäss eine Vielzahl von einzelnen Drosselelementen 29, die in einer ansonsten undurchlässigen Wand gleichmässig verteilt angeordnet sind. Das einzelne Drosselelement 29 hat (Fig. 3) eine (im Beispiel kreisrunde) Durchtrittsöffnung 30, in der nach Art eines Klappenventils eine Drosselklappe 33 mittels einer Klappenachse 32 um eine Drehachse 31 verschwenkbar angeordnet ist. Je nach Schwenkstellung der Drosselklappe 33 ist die Durchtrittsöffnung 30 mehr oder weniger offen. Über die Stellung der Drosselklappe 33 kann der Druckverlustkoeffizient und somit der Druckabfall beeinflusst werden. Die einzelnen "Drosseln" bzw. Drosselelemente 29 können nach Bedarf kombiniert werden.

Die Aufgabe der Drosselvorrichtungen ist immer, den Druckabfall und somit den Volumenstrom zu beeinflussen. Die Einstellung des Volumenstromes erfolgt stufenlos im laufenden Betrieb der Anlage. Über die Temperaturüberwachung des Generators wird der optimale Volumenstrom eingestellt. Hierzu kann eine Drosselsteuerung vorgesehen werden, die Temperaturinformationen von einem Temperaturaufnehmer erhält und danach die Drosselung in der Drosselvorrichtung 25 steuert. Wie bereits erwähnt, kann dies einmalig bei der Inbetriebnahme geschehen oder bei Bedarf kann der Volumenstrom je nach Lastfall auch dynamisch geregelt werden. Im ersteren Falle kann es von Vorteil sein, im Interesse eines geringeren apparativen Aufwands zumindest einen Teil der Drosselelemente 29 als fixe Blenden auszuführen. Dies gehört jedoch nicht zur Erfindung. Indem diese hinsichtlich Querschnittsform und/oder -fläche unterschiedlich ausgebildet sind, können der Druckverlust und damit die Verteilung des Kühlluftstroms über den Querschnitt beeinflusst werden. Die Drosselvorrichtungen 25 beziehungsweise 28 können einfach und robust gefertigt werden, da keine besonderen Forderungen bezüglich der Toleranzen bestehen.

### BEZUGSZEICHENLISTE

- 10: Motorgenerator (luftgekühlt)
- 11: Rotorwelle
- 12,13: Radiallager
- 14: Axiallager
- 15: Maschinenachse
- 16: Rotorwicklung
- 17: Statorwicklung
- 18: Statorblechpaket
- 19: Kühler
- 20: Wasser
- 21: Rotorstern
- 22: Eintrittsöffnung
- 23: Durchtrittskanal
- 24: Kühlluft
- 28: Drosselvorrichtung
- 29: Drosselelement
- 30: Durchtrittsöffnung
- 31: Drehachse
- 32: Klappenachse
- 33: Drosselklappe
- 34: Rotor
- 35: Stator

## Patentansprüche

1. Luftgekühlter Motorgenerator (10), umfassend einen Rotor (34) mit einer um eine Maschinenachse (15) drehbar angeordneten Rotorwelle (11), auf welcher eine Rotorwicklung (16) angeordnet ist, sowie einen Stator (35) mit einem Statorblechpaket (18) und einer darin angeordneten Statorwicklung (17), welche die Rotorwicklung (16) konzentrisch umgeben, wobei ein mit Kühlluft (24) arbeitender, geschlossener Kühlkreislauf vorgesehen ist, in welchem die Kühlluft die Rotorwicklung (16) und die Statorwicklung (17) radial von innen nach aussen durchströmt, in ausserhalb des Stators (35) angeordneten Kühlern (19) abgekühlt und wieder in den Rotor (34) zurückgeführt wird, **dadurch gekennzeichnet, dass** zur Einstellung des Volumenstroms der Kühlluft im Kühlkreislauf an den Kühlern (19) einstellbare Drosselvorrichtungen (25, 28) vorgesehen sind, die eine Vielzahl von in einer Ebene senkrecht zur Strömungsrichtung verteilt angeordnete Drosselelemente (29) aufweisen, wobei jedes der Drosselelemente (29) eine Durchtrittsöffnung (30) umfasst, in welcher nach Art eines Klappenventils eine um eine Drehachse (31) verschwenkbare Drosselklappe (33) angeordnet ist und die einzelnen Drosselelemente (29) in einer ansonsten undurchlässigen Wand gleichmässig verteilt angeordnet sind.

2. Motorgenerator nach Anspruch 1, **dadurch gekennzeichnet, dass** die Drosselvorrichtungen (25, 28) auf der Eintrittsseite der Kühler (19) angeordnet sind.

3. Motorgenerator nach Anspruch 1, **dadurch gekennzeichnet, dass** die Drosselvorrichtungen (25, 28) auf der Austrittsseite der Kühler (19) angeordnet sind.

4. Motorgenerator nach Anspruch 1, **dadurch gekennzeichnet, dass** die Durchtrittsöffnungen (30) hinsichtlich Querschnittsform und/oder -fläche übereinstimmen.

5. Motorgenerator nach Anspruch 1, **dadurch gekennzeichnet, dass** die Durchtrittsöffnungen (30) hinsichtlich Querschnittsform und/oder -fläche unterschiedlich ausgebildet sind.

6. Motorgenerator nach einem der Ansprüche 1, 4 oder 5, **dadurch gekennzeichnet, dass** die Drosselelemente (29) einzeln betätigbar sind.

## Claims

1. Air-cooled motor-generator (10), comprising a rotor (34) having a rotor shaft (11) which is rotatable about a machine axis (15) and on which a rotor winding (16) is arranged, and also comprising a stator (35) having a stator lamination stack (18) and a stator winding (17) arranged therein which concentrically surround the rotor winding (16), wherein a closed cooling circuit operated with cooling air (24) is provided, in which the cooling air flows through the rotor winding (16) and the stator winding (17) radially from the inside to the outside, is cooled in coolers (19) arranged outside the stator (35) and is returned into the rotor (34), **characterised in that** in order to set the volume flow of the cooling air in the cooling circuit, adjustable throttle devices (25, 28) are provided on the coolers (19), which throttle devices comprise a multiplicity of throttle elements (29) distributed in a plane perpendicular to the flow direction, wherein each of the throttle elements (29) has a through-opening (30) in which a throttle valve (33) which can pivot about a rotational axis (31) is arranged in the manner of a check valve, and the individual throttle elements (29) are evenly distributed in an otherwise impervious wall.

2. Motor-generator as claimed in claim 1, **characterised in that** the throttle devices (25, 28) are arranged on the inlet side of the coolers (19).

3. Motor-generator as claimed in claim 1, **characterised in that** the throttle devices (25, 28) are arranged on the outlet side of the coolers (19).

4. Motor-generator as claimed in claim 1, **characterised in that** the through-openings (30) coincide in terms of their cross-sectional shape and/or area.

5. Motor-generator as claimed in claim 1, **characterised in that** the through-openings (30) are formed differently in terms of their cross-sectional shape and/or area.

6. Motor-generator as claimed in any one of claims 1, 4 or 5, **characterised in that** the throttle elements (29) can be actuated individually.

## Revendications

1. Moteur-générateur (10) refroidi par air, comprenant un rotor (34) doté d'un arbre de rotor (11) disposé en rotation autour d'un axe de machine (15), sur lequel est disposé un enroulement de rotor (16), ainsi qu'un stator (35) doté d'un empilage de tôles de stator (18) et d'un enroulement de stator (17) disposé dans celui-ci, lesquels entourent l'enroulement de rotor (16) de manière concentrique, dans lequel un circuit de refroidissement fermé fonctionnant avec de l'air de refroidissement (24) est prévu, l'air de refroidissement, dans le circuit de refroidissement, traversant radialement l'enroulement de rotor (16) et l'enroulement de stator (17) de l'intérieur vers l'extérieur, étant refroidi dans des refroidisseurs (19) disposés à l'extérieur du stator (35) et étant redirigé vers le rotor (34), **caractérisé en ce que** pour le réglage du débit volumique de l'air de refroidissement dans le circuit de refroidissement, des dispositifs d'étranglement (25, 28) réglables sont disposés sur les refroidisseurs (19), lesquels comportent une pluralité d'éléments d'étranglement (29) distribués dans un plan perpendiculaire à la direction de l'écoulement, dans lequel chacun des éléments d'étranglement (29) comprend une ouverture de passage (30), à l'intérieur de laquelle une soupape d'étranglement (33) est disposée en pivotement autour d'un axe de rotation (31) selon le type d'une vanne papillon et les éléments d'étranglement (29) individuels sont distribués également dans une paroi autrement étanche.

2. Moteur-générateur selon la revendication 1, **caractérisé en ce que** les dispositifs d'étranglement (25, 28) sont disposés sur le côté entrée des refroidisseurs (19).

3. Moteur-générateur selon la revendication 1, **caractérisé en ce que** les dispositifs d'étranglement (25, 28) sont disposés sur le côté sortie des refroidisseurs (19).

4. Moteur-générateur selon la revendication 1, **caractérisé en ce que** les ouvertures de passage (30) coïncident en ce qui concerne la forme et/ou la surface de leur section transversale.

5. Moteur-générateur selon la revendication 1, **caractérisé en ce que** les ouvertures de passage (30) sont réalisées différemment en ce qui concerne la forme et/ou la surface de leur section transversale.

6. Moteur-générateur selon l'une quelconque des revendications 1, 4 ou 5, **caractérisé en ce que** les éléments d'étranglement (29) sont actionnables de manière individuelle.
